# EUROPEAN PATENT APPLICATION

(11) **EP 1 583 005 A2**
(43) Date of publication of application: **05.10.2005**
(21) Application number: 05251839.6
(22) Date of filing: 24.03.2005
(51) Int. Cl.: G06F 17/30

(54) **File management and apparatus for controlling digital contents in multimedia appliances and information recording medium therefor**

(30) Priority: 27.08.2004 KR 2004068031; 02.04.2004 US 558549 P
(71) Applicant: SAMSUNG ELECTRONICS CO., LTD., Gyeonggi-do (KR)
(72) Inventor: Ahn, Jin-yong, Gyeonngi-do (KR); Shin, Seong-kook, Seocho-gu, Seoul (KR); Kim, Du-li, Yeongtong-gu, Suwon-si Gyenngi-do (KR); Kim, Young-yoon, Seocho-gu, Seoul (KR); Kim, Hee-yeon, Suwon-si, Gyeonngi-do (KR)
(74) Representative: Brandon, Paul Laurence

(57) **Abstract**

A file management method for controlling assets, such as digital contents, in multimedia appliances, such as digital still cameras, comprising
generating and managing an index file containing information on assets obtained by the multimedia appliances and based on MusicPhotoVideo (MPV),
wherein the information on assets includes at least one of information on individual assets and information on an album obtained by grouping the individual assets, and
wherein information on the individual assets includes at least one of an identifier (mpv:id) identifying a particular one of the individual assets, meta data indicating attribute information of the particular asset, and location information (LastURL) indicating the location where the particular asset is stored.

## Description

The present invention relates to controlling assets such as digital contents in a multimedia application environment, and more particularly, to file management methods and apparatuses for controlling assets in multimedia appliances and an information recording media therefor.

Media files, such as digital still images, video files, digital audio files, and text files are generally processed and reproduced by using a personal computer (PC). Also, as apparatuses generating these media files, for example, digital cameras, digital camcorders, digital audio players (MP3, WMA), have increased rapidly, a variety of types of digital contents having massive amounts of data are generated.

However, in order to manage adequately multimedia data, file based information is requested of users, and if thus managed data, to which attributes, such as a data reproduction order or method, are given, is reproduced in an apparatus other than a PC, the attribute data given in the PC is lost and only original data is transferred. That is, interoperability of data and data attributes among consumer electronic products, PCs, and digital contents generating apparatuses is very low at present. Several examples in this regard will now be explained.

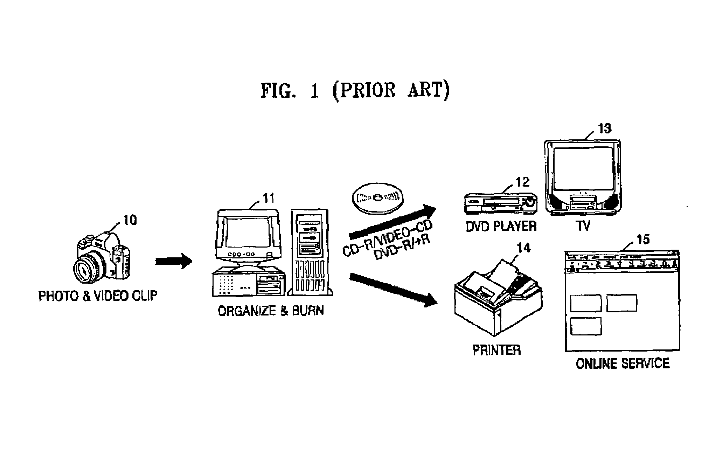

FIG. 1 is a reference diagram explaining the concept of MusicPboto Video (MPV) according to the conventional technology.

Referring to FIG. 1, by using a digital camera 10, a photo or video clip is generated, the generated photo or video clip is moved to a PC 11, operations such as editing are performed, and the processed contents are burned on an optical recording medium such as a CD-R/Video-CD, and a DVD-R/+R. The thus burned optical recording medium can reproduce the contents in a DVD player 12 or a TV 13.

Also, the contents in the PC can be transferred to a printer 14 to be printed, and to an online medium 15.

Thus, by using a digital camera, a photo is captured, and attribute data, such as a slide show order or a time interval between photos in a slide show, used in association with the captured photos in the digital camera, or relationships between the captured photos determined when a panorama function is used, is stored together with the original data. When the digital camera is connected to a TV through an audio/video (AV) cable and an image is transmitted to the TV, contents with each attribute expressed can be viewed by a user. However, when the digital camera is connected to a PC through a universal serial bus (USB) cable, only the original data is transmitted to the computer and all the attached attributes are lost.

This is because the digital camera and the PC have information structures different from one another. As shown in the above example, the attribute data stored in the digital camera, that is, metadata, has no interoperability with the PC. To address this problem, a standard referred to as MusicPhotoVideo (MPV) is being prepared. The MPV is a standard to further ease expression, exchange, processing, and reproduction of metadata such as digital music, photo, and video in consumer electronics (CE) apparatuses and IT apparatuses. The MPV standard, which is currently being prepared by the Optical Storage Technology Association (OSTA), defines manifest, metadata, and practice to process and reproduce sets of contents, such as digital photos, video, and audio, stored in a storage medium such as an optical disk, a memory card, a computer hard disk, or exchanged according to Internet protocols. The manifest is an independent extensible markup language (XML) document file and obtained by grouping all MPV elements.

The MPV is generally broken down into two parts: MPV core specification (MPV Core-Spec.) and Profile. The MPV Core includes three basic elements: collection, metadata, and identifier. The collection includes a manifest as a root member, an album, marked assets (MarkedAsset), and an asset list (AssetList). An asset is a basic unit of contents processed by the MPV. There are two types of assets: a simple media asset such as digital photos, video, digital audio, and documents, etc., and a composite media asset such as digital photos + digital audio, digital still multi-shot sequences, digital still panorama sequences, etc.

Based on the contents recorded in an MPV file having this structure, MPV software performs such that an asset is read and reproduced. That is, the MPV file is placed between MPV software and data referred to as an asset, and plays a linking role. Accordingly, the MPV file can be regarded as a file system in a higher level operating similarly to the conventional file system.

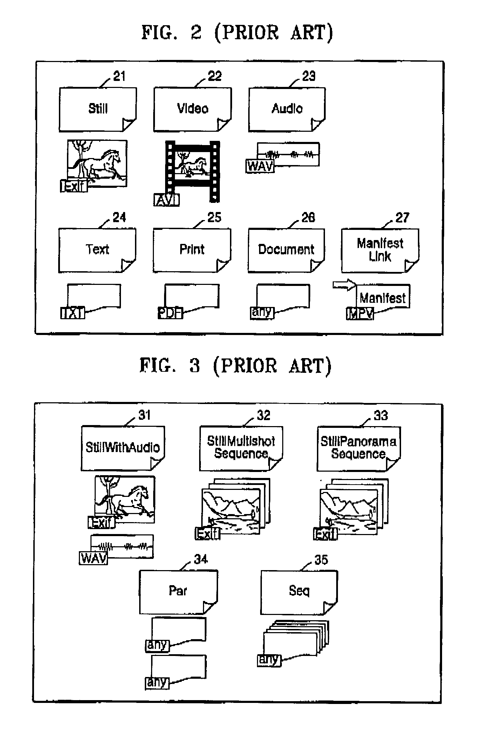

The asset that is a basic unit of contents processed in the MPV will now be explained in more detail with reference to FIGS. 2 and 3.

FIG. 2 is a diagram showing an example of MPV simple assets according to the conventional technology.

Simple assets correspond to physical storage entities.

As simple assets, there are a still image file 21, a video file 22, an audio file 23, a text file 24, a print 25, a document 26, and a manifest link (ManifostLink) 27.

FIG. 3 is a diagram showing an example of MPV composite assets according to the conventional technology.

Composite assets are meaningful groups of media assets. These composite assets correspond to ordinary capture modes of a digital camera.

As composite assets, there are a still with audio (StillWithAudio) 31, a still multi-shot sequence (StillMultishotSequence) 32, a still panorama sequence (StillPanoramaSequence) 33, a Par 34, and a Seq 35.

Among these, the Par 34 or Seq 35 permits arbitrary expression of media assets different from each other in types. That is, while other composite assets are fixed in that simple assets contained in respective composite assets are predefined, simple assets contained in the Par or Seq arc not fixed such that simple assets can be arbitrarily combined.

The Par defines a composite asset when a set of assets arc generated in synchronization with each other. Referring to FIG. 3, it can be seen that the Par 34 is formed with a group of assets and these assets arc arranged in parallel.

The Seq 35 defines a composite asset when a set of assets arc generated in order. Referring to FIG. 3, it can be seen that the Seq 35 is formed with a group of assets, which are arranged in a predetermined order.

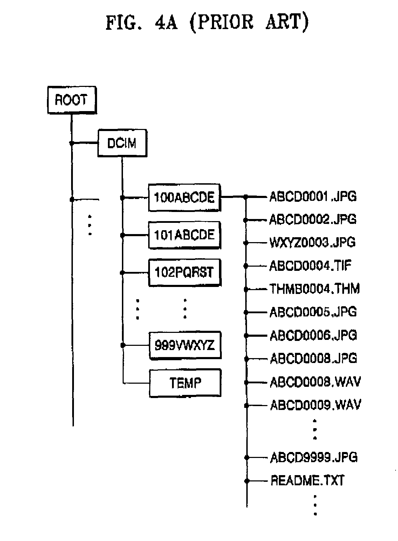

Meanwhile, a still image and audio data recorded and stored by a digital still camera (DSC) will have a directory and file structure of a design rule for camera file system (DCF) method. In this DCF directory and file structure, as shown in FIG. 4A, below the root directory, there is a digital camera image (DCIM) directory at the top level. Also, below this DCIM directory, there can be a maximum of 900 directories, each having an 8 digit alphanumeric name combining a 3 digit serial number different from each other, for example, any one of 100 through 999, and 5 characters that can be arbitrarily designated by a user. In each directory having an 8 digit alphanumeric name, for example, in 100ABCDE directory as shown in FIG. 4A, a plurality of files each having a total 8 digit alphanumeric file name combining 4 characters that can be designated arbitrarily by a user and a 4 digit serial number that must be different from each other can be recorded. As these files, a still image file (*.JPG), a still image file (*.TIF), and a thumbnail, image file (*.THM) can be included and recorded, and a wave audio file (*.WAV) created using a PCM method can be recorded.

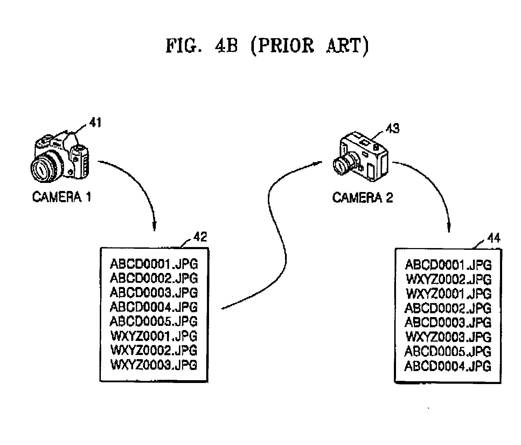

FIG. 4B is a reference diagram explaining a problem occurring when photos taken by one camera are reproduced in another camera according to the conventional technology.

Referring to FIG. 4B, even though still photos are taken in camera 1 41 and a list indicating the order of photos is generated, there is as yet no system capable of managing these files according to the conventional technology, and therefore when these files arc reproduced in camera 2 43, the files are presented arbitrarily irrespective of the order in which the photos were taken in camera 141 as shown in the list 44.

However, as the penetration of digital still cameras has been greatly increasing, a file management system enabling a user to control photo data taken in a digital still camera and recorded audio data is needed.

Preferred embodiments of the present invention provide a file management method and apparatus enabling convenient and easy control of assets in multimedia appliances and an information recording medium therefor.

According to an aspect of the present invention, there is provided a file management method for controlling assets in multimedia appliances, including: generating and managing an index file containing information on assets obtained by the multimedia appliances and based on MusicPhotoVideo (MPV).

The information on assets may include at least one of information on individual assets and information on an album obtained by grouping the individual assets.

The information on the individual assets may include at least one of an identifier (mpv:id) identifying the asset, meta data indicating the attribute information of the asset, and location information (LastURL) indicating the location where the asset is stored.

The information on the album may include at least one of an identifier (mpv:id) identifying the album, meta data indicating the attribute information of the album, and location information (LastURL) indicating the location where the album is stored.

The album may include information on one or more individual assets included in the album.

The index file may be located at the root directory of a design rule for camera file system (DCF) directory structure.

According to another aspect of the present invention, there is provided a file management apparatus for controlling assets in multimedia appliances, including: a file management unit generating and managing an index file containing information on assets obtained by the multimedia appliances and based on MusicPhotoVideo (MPV).

According to still another aspect of the present invention, there is provided an information storage medium for controlling assets in multimedia appliances, including: an index file recorded thereon and containing information on assets obtained by the multimedia appliances and based on MusicPhotoVideo (MPV).

The present invention will become more apparent by describing in detail exemplary embodiments thereof with reference to the attached drawings in which:

FIG. 1 is a reference diagram for explaining the concept of MusicPhotoVideo (MVP) according to the conventional technology;

FIG. 2 illustrates an example of a simple asset of the MPV according to the conventional technology;

FIG. 3 illustrates an example of MPV composite assets according to the conventional technology;

FIGS. 4A and 4B are reference diagrams explaining a problem occurring when photos taken by one camera are reproduced in another camera according to the conventional technology;

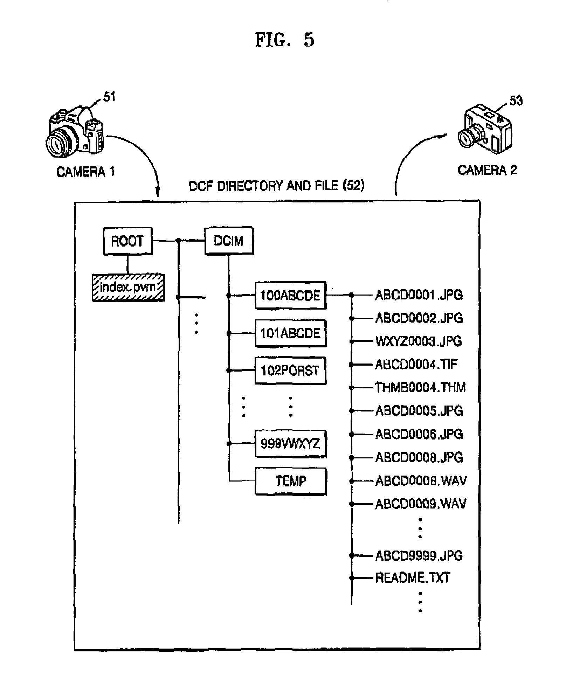

FIG. 5 is a reference diagram explaining an asset management method according to an aspect of the present invention;

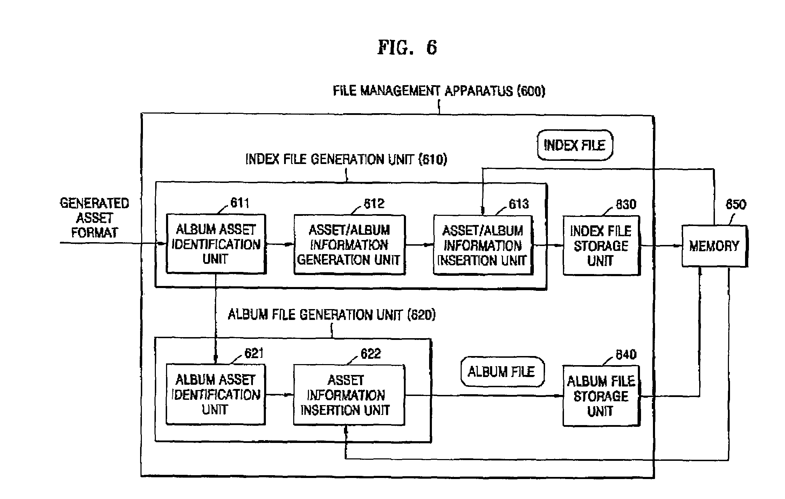

[40] FIG. 6 is a block diagram of a file management apparatus according to an aspect of the present invention;

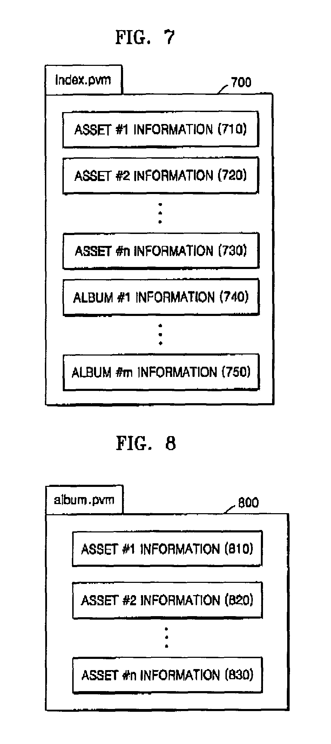

FIG. 7 is a diagram of the structure of an index file (index.pvm) according to an aspect of the present invention;

FIG. 8 is a diagram of the structure of an album file (album.pvm) according to an aspect of the present invention;

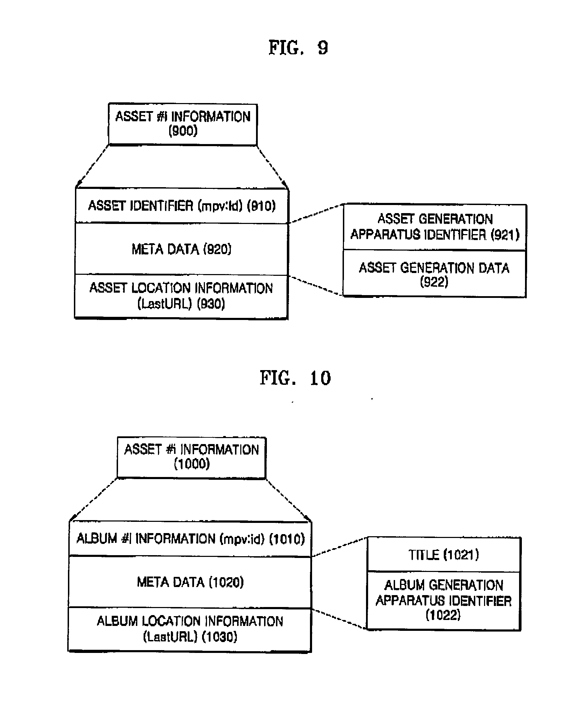

FIG. 9 is a diagram of the data structure of asset information shown in FIG. 7;

FIG. 10 is a diagram of the data structure of album information shown in FIG. 7;

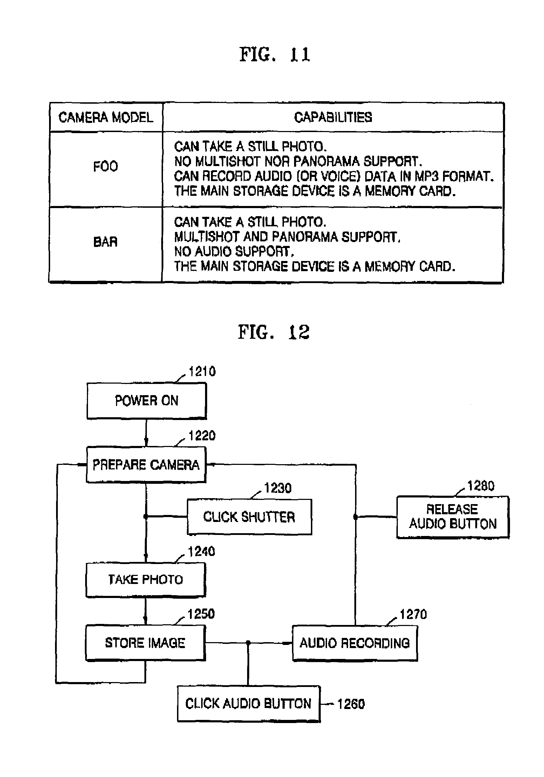

FIG. 11 is a diagram showing camera model specifications explaining a first exemplary embodiment and a second exemplary embodiment according to the present invention;

FIG. 12 is a flowchart showing the process of a photo taking operation according to the first exemplary embodiment of the present invention;

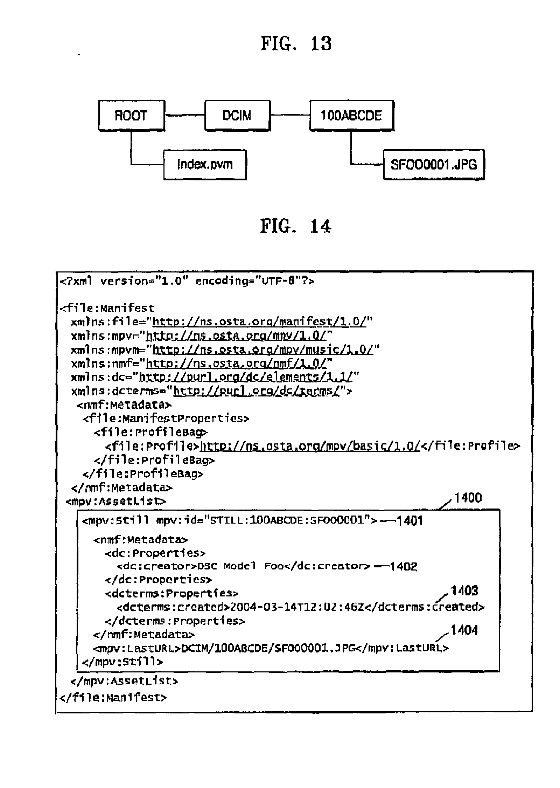

FIG. 13 is a diagram of the directory structure generated when one still asset is generated according to the first exemplary embodiment of the present invention;

FIG. 14 is a diagram of the structure of an index file (index.pvm) shown in FIG. 13;

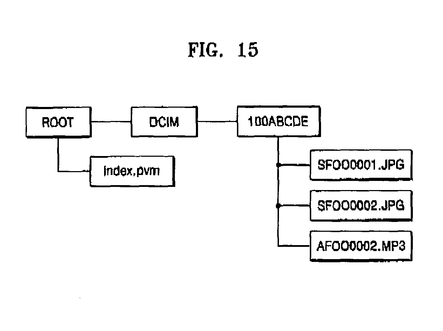

FIG. 15 is a diagram of the directory structure when one still with audio asset is added in the directory state of FIG. 13;

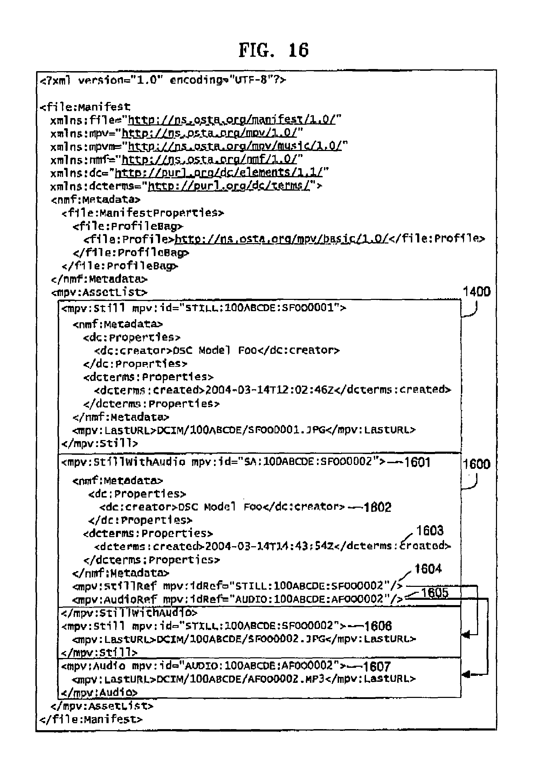

FIG. 16 is a diagram of the structure of an index file (index.pvm) shown in FIG. 15;

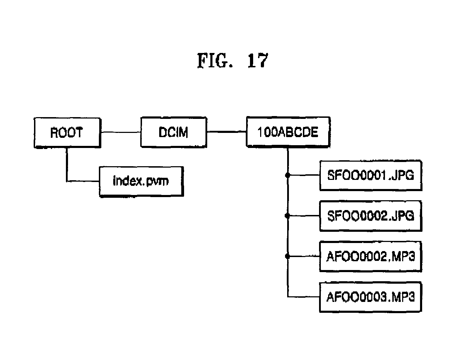

FIG. 17 is a diagram of the directory structure when one audio asset is added in the directory state of FIG. 15;

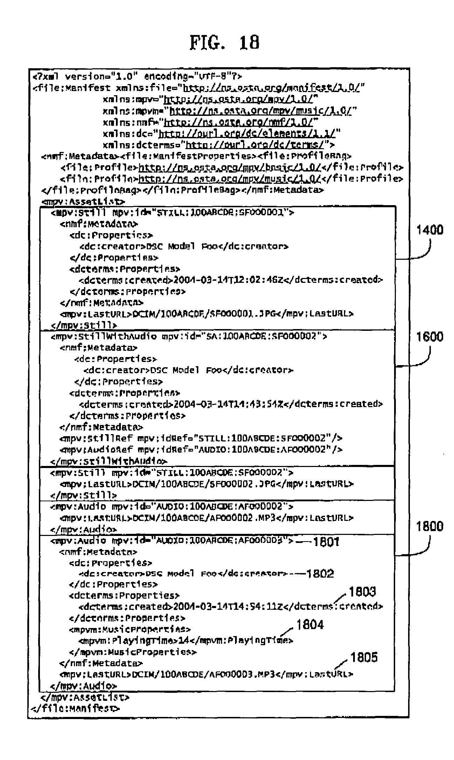

FIG. 18 is a diagram of the structure of an index file (index.pvm) shown in FIG. 17;

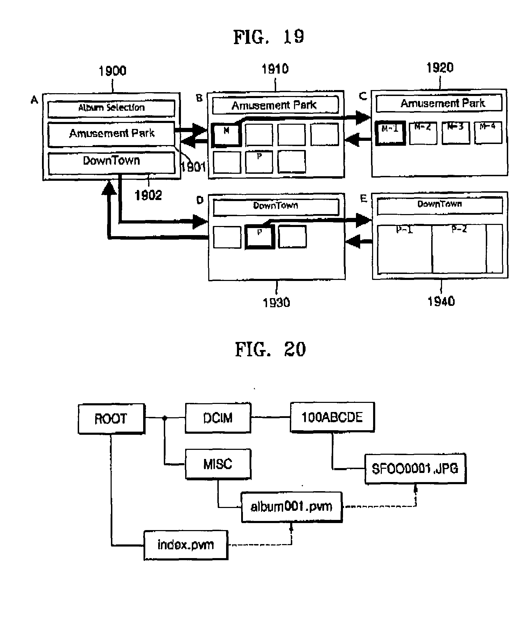

FIG. 19 illustrates an example of a screen output on the LCD of a camera that can be provided by a file management method according to the second exemplary embodiment of the present invention;

FIG. 20 is a diagram of the directory structure generated when one still asset is generated and formed as an album according to the second exemplary embodiment of the present invention;

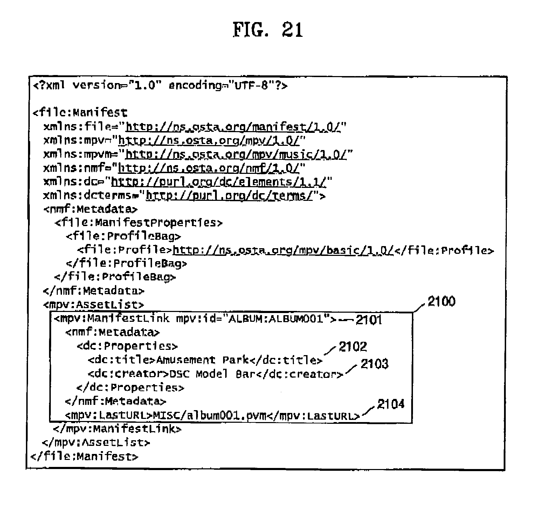

FIG. 21 is a diagram of the structure of an index file (index.pvm) shown in FIG. 20;

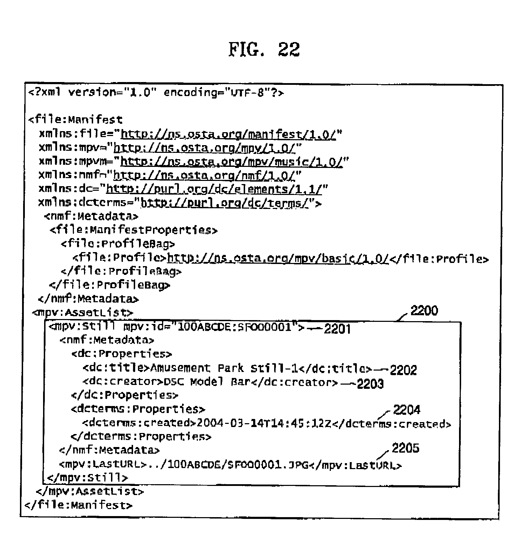

FIG. 22 is a diagram of the structure of an album file (album001.pvm) shown in FIG. 20;

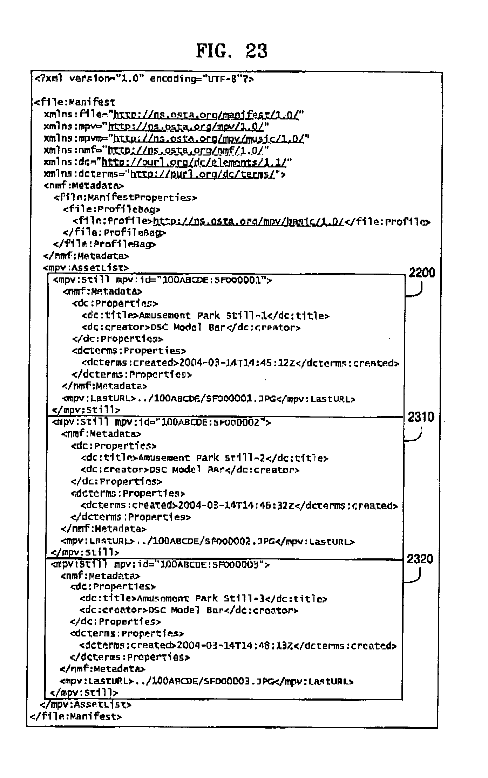

FIG. 23 is a diagram of the structure of an album file (album001.pvm) presented when two still assets are further generated and formed as an album file (album001.pvm) in the directory state shown in FIG. 20;

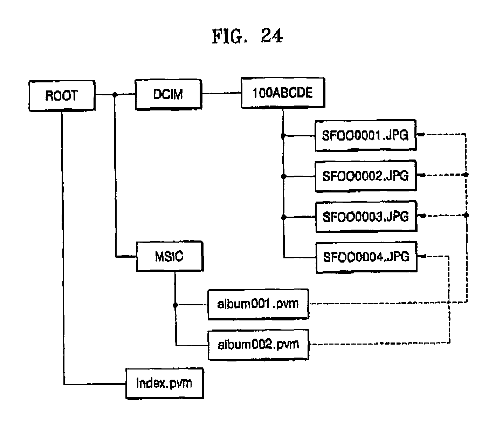

FIG. 24 is a diagram of the directory structure when three still assets are further generated and two album files arc further generated in the directory state shown. in FIG. 20;

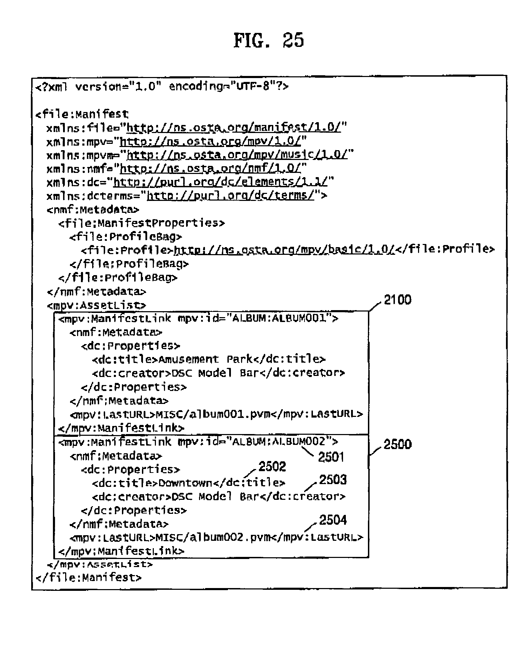

FIG. 25 is a diagram of the structure of an index file (index.pvm) shown in FIG. 24; and

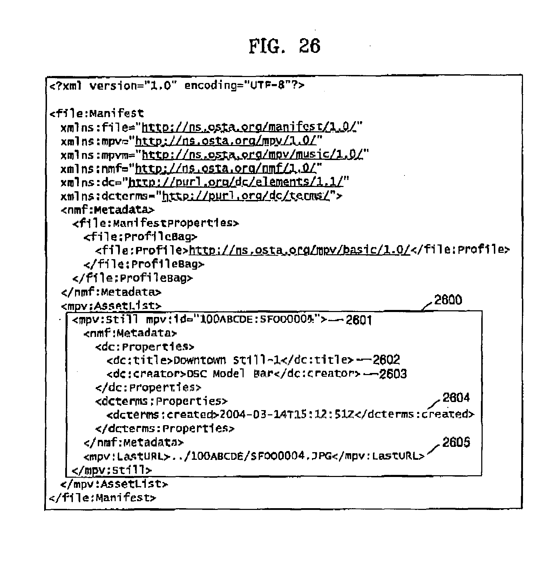

FIG. 26 is a dia.gram of the structure of an album file (album002.pvm) shown in FIG. 24.

The present invention will now be described more fully with reference to the accompanying drawings, in which exemplary embodiments of the invention are shown.

FIG. 5 is a reference diagram explaining an asset management method according to the present invention.

In this embodiment of the present invention, in order for a user to conveniently and easily manage photos taken by a digital still camera, an index file, i.e., index.pvm, using MPV data is generated and managed in a DCF directory and file structure 52. The index file contains information on assets stored in DCF directories, and in order to easily search for this index file, preferably, but not necessarily, the index file is stored at the root directory. Also, since the DCF directory rules are complied with and assets are managed below these DCF directories, compatibility with conventional apparatuses using the DCF format can be obtained. Thus, by managing the index file containing information on assets in the root directory of the DCF directory structure, the assets can be reproduced and managed in a digital camera 2 53 in the same order as the order in which the assets arc reproduced in a digital camera 1 51.

FIG. 6 is a block diagram of a file management apparatus according to an embodiment of the present invention.

Referring to FIG. 6, the file management apparatus includes an index file generation unit 610 generating an index file, an album file generation unit 620 generating an album file, an index file storage unit 630 storing the generated index file in a memory 650, and an album file storage unit 640 storing the generated file in the memory 650. The memory 650 stores data on the DCF directory structure that changes whenever files and photos in relation to image or video data taken by a digital still camera and recorded audio data are generated, and the index file and the album file according to this embodiment of the present invention.

The term "album" means a group of photos taken by a digital still camera. For example, if a user wants to form an album to include photos taken in an amusement park, the album can be used. When an asset to be included in an album is generated, an index file having album information is generated by the index file generation unit 610 and stored, and at the same time, an album file having asset information is generated by the album file generation unit 620 and stored. When an asset not to be included in the album is generated, only an index file having asset information is generated by the index file generation unit 610 and stored.

The index file generation unit 610 includes an album asset identification unit 611, an asset/album information generation unit 612, and an asset/album information insertion unit 613.

The album asset identification unit 611 identifies whether or not a newly generated asset is to be included in an album.

The asset/album information generation unit 612 generates album information if the newly generated asset is included in an album, and generates asset information if the newly generated asset is not included in an album.

The asset/album information insertion unit 613 adds album information or asset information generated by the asset/album information generation unit 612 to the index file.

First, the operation in a case when a newly generated asset is not included in an album will now be explained. If it is determined by the album asset identification unit 611 that a newly generated asset is not included in an album, the album file generation unit 620 does not operate and the asset/album information generation unit 612 generates asset information. Then, the asset/album information insertion unit 613 inserts the generated asset information to an index file read from the memory 650. If the generated asset is the first asset and therefore there is no index file stored in the memory 650, an index file including header information complying with the MPV file rule and information on generated assets is newly generated.

The index file storage unit 630 stores a newly generated index file or an index file to which asset information is added, to the memory 650. Here, the meaning of 'storage' includes forming a DCF directory so that this index file is located at the root directory of the DCF directory structure.

If it is determined by the album asset identification unit 611 that a newly generated asset is to be included in an album, the asset/album information generation unit 612 generates album information and the album file generation 620 should also generate an album file.

The asset/album information generation unit 612 generates album information on an album to which the asset is to be included. The asset/album information insertion unit 613 inserts the generated album information to an index file read from the memory 650, or generates an index file and inserts the album information in the index file. The index file storage unit 630 stores the index file containing album information in the memory 650.

The album file generation unit 620 includes an asset information generation unit 621 and an asset information insertion unit 622.

The asset information generation unit 621 generates information on an asset included in an album and the asset information insertion unit 622 reads an album file from the memory 650 and inserts the generated information on the asset, or generates a new album and inserts the information on the asset to the album.

The album file storage unit 640 stores the newly generated album file or the album file to which the asset information is added, in the memory 650. Here, the meaning of "storage" includes forming a DCF directory so that this album file is located at, for example, MISC directory below the root directory in the DCF directory structure.

FIG. 7 is a diagram of the structure of an index file (index.pvm) according to an embodiment of the present invention.

Referring to FIG. 7, the index file 700 includes information on assets, asset #1 information 710, asset #2 information 720, ..., asset #n information 730, and information on albums, album #1 information 740, ..., album #m information 750.

FIG. 9 is a diagram of the data structure of asset information shown in FIG. 7.

Referring to FIG. 9, asset #i information 900 includes an asset identifier 910, meta data 920, and asset location information 930.

The asset identifier 910 is a kind of identifier to Identify an asset, and mpv:id in MPV data can be used for this.

The meta data 920 indicates attribute information on this asset and includes, for example, an asset generation apparatus identifier 921 indicating an asset generation apparatus, and an asset generation date 922 indicating the date an asset is generated.

The asset location information 930 indicates the location where this asset is stored in the DCF directory, and LastURL in MPV data can be used for this.

Also, a diagram of the data structure of album information shown in FIG. 7 is shown in FIG. 10.

Referring to FIG. 10, album #i information 1000 includes an asset identifier 1010, meta data 1020, and album location information 1030.

The album identifier 1010 is a kind of identifier to identify an album and mpv:id in MPV data can be used for this.

The meta data 1020 indicates attribute information on this album and includes, for example, a title 1021 indicating the tile of the album, and an album generation apparatus identifier 1022 indicating an album generation apparatus which generated this album.

The album location information 1030 indicates the location where this album is stored in the DCF directory, and LastURL in MPV data can be used for this.

FIG. 8 is a diagram of the structure of an album file (album.pvm) according to an embodiment of the present invention.

Referring to FIG. 8, the album file 800 includes information on assets, asset #1 information 810, asset #2 information 820, ..., asset #n information 830. The details of asset information are the same as described above with reference to FIG. 9.

The MPV data according to preferred embodiments of the present invention can be designed in a variety of ways. The MPV data can be designed according to the asset type that can be supported by a digital still camera. If a digital still camera can generate only a simple still image, <mpv:still> type can be used. Also, if a digital still camera can support a multi-shot still image or a panorama image, <mpv:StillMultishotSequence> or <mpv:StillPanoramaSequence> can be used. Also, if a digital still camera can support recording voice or audio data, <mpv:Audio> or <mpv:StillWithAudio) type can be used.

A file management method according to the present invention will now be explained with specific exemplary embodiments.

FIG. 11 is a diagram showing camera model specifications explaining a first exemplary embodiment and a second exemplary embodiment according to the present invention.

Two digital still camera models arc assumed. Camera model "Foo" is to explain the first exemplary embodiment according to the present invention, and camera model "Bar" is to explain the second exemplary embodiment.

Model "Foo" is for a camera mode that is mainly for taking photos. Model "Foo" can take still photos, but does not have multi-shot and panorama functions, and can record audio or voice data in the MP3 format. The main storage device of model "Foo" is a memory card.

Model "Bar" is for a playback mode that is mainly for previewing taken photos. Model "Bar" can take a still photo, support multi-shot and panorama functions, but does not support audio. The main storage device of model "Bar" is a memory card.

FIG. 12 is a flowchart showing the process of a photo taking operation according to the first exemplary embodiment of the present invention.

The power of a camera is turned on in operation 1210. If the camera is ready to take a photo in operation 1220, a user clicks the shutter in operation 1230 and takes a photo in operation 1240. After taking a photo, the image is stored in operation 1250. At this time, if the user clicks an audio button in operation 1260, audio is recorded in operation 1270. Then, if the audio button is released in operation 1280, audio recording stops and the camera is again in a ready state in operation 1220.

At this time, model "Foo" stores a still image complying with the DCF naming rule. Also, since model "Foo" supports a still image and audio, such assets as <mpv:Still>, <mpv:Audio>, and <mpv:StillWithAudio> can be used in model "Foo".

If a memory card formatted and storing nothing is inserted into model "Foo" digital still camera and a still photo is taken as described above, a directory as shown in FIG. 13 is generated according to an embodiment of the present invention.

FIG. 13 is a diagram of the directory structure generated when one still asset is generated according to the first exemplary embodiment of the present invention.

Referring to FIG. 13, below the root directory, a DCIM directory is generated, and below the DCIM directory, 100ABCDE directory is generated and still image SFOO0001.JPG file is stored in this directory. This is the same as when following the ordinary DCF. Then, an index file, "index.pvm", according to this embodiment of the present invention is generated at the root directory.

FIG. 14 is a diagram of the structure of the index file (index.pvm) shown in FIG. 13.

Referring to FIG. 14, the part above the rectangular box 1400 of the index file relates to basic header information of the MPV file and therefore detailed explanation will be omitted. The part corresponding to the rectangular box 1400 is information on the generated asset.

The information on the generated still image asset includes an asset identifier, meta data and asset location information, as described above with reference to FIG. 9.

The identifier of the still asset, mpv:id 1401, is generated by using the name of the directory storing the still image and the file name of the still image.

The meta data of the asset includes two attributes, creator and created.

The "creator" 1402 indicates an asset generation apparatus and uses the model name of the digital still camera, which generated this still image. The "created" 1403 indicates an asset generation date and can be easily obtained by referring to the file attribute of the file system. As meta data information, in addition to the asset generation apparatus and the asset generation date, anything that indicates attribute information of the asset can be used.

LastURL 1404 that is asset location information indicating the location where the asset is stored is generated by using the location where this still image is stored, by expressing from below the root directory.

Now, it is assumed that the user takes another photo with voice data added to the photo. A still image to which audio data is added can use <mpv:StillWithAudio> type MPV data.

FIG. 15 is a diagram of the directory structure when one still with audio asset is added in the directory state of FIG. 13.

Referring to FIG. 15, it can be seen that SFOO0002.JPG and AFOO0002.mp3 files are added at 100ABCDE directory. Thus, due to the addition of SFOO0002.JPG and AFOO0002.mp3 files, information on SFOO0002.JPG and AFOO0002-mp3 files is added to index.pvm.

FIG. 16 is a diagram of the structure of the index file (index.pvm) shown in FIG. 15.

Referring to FIG. 16, a rectangular box 1600 showing information of a still with audio asset is added below the rectangular 1400.

The identifier, mpv:id 1601, of the still with audio asset is expressed as "SA:100ABCDE:SFOO0002", and "creator" 1602 and "created" 1603 are included as meta data attributes.

Also, StillRef 1604 to refer to a still asset included in the still with audio asset and AudioRef 1605 to refer to an audio asset are included.

The reference to the asset by StillRef 1604 leads to asset information 1606 in which mpv:id is "STILL:100ABCDE:SFOO0002" and LastURL is "DCIM/100ABCDE/SFOO0002.JPG".

The reference to the asset by AudioRef 1605 leads to asset information. 1607 in which mpv:id is "AUDIO:100ABCDE:AFOO0002" and LastURL is "DCIM/100ABCDE/AFOO0002.MP3".

Thus, two dependent assets, the still asset and the audio asset, belong to the still with audio asset that can be said to be a master asset. Since a master asset includes meta data, separate meta data docs not need to be provided to the dependent assets of the master asset.

Now, it is finally assumed that an asset formed with one voice data item is added.

FIG. 17 is a diagram of the directory structure when one audio asset is added in the directory state of FIG. 15.

Referring to FIG. 17, it can be seen that AFOO0003.mp3 file is further added to the 100ABCDE directory in addition to SFOO0001.JPG, SFOO0002.JPG, and AFOO0002.mp3. Thus, by the addition of the AFOO0003.mp3 file, information on AFOO0003.mp3 asset is added to index.pvm.

FIG. 18 is a diagram of the structure of the index file (index.pvm) shown in FIG. 17.

Referring to FIG. 18, information 1800 on an audio asset whose mpv:id is "AUDIO:100ABCDE:AFOO0003" is further added in addition to information 1400 on the still asset whose mpv:id is "STILL:100ABCDE:SFOO0001" and information 1600 on the still with audio asset whose mpv:id is "SA:100ABCDE:SFOO0002".

The identifier of the audio asset, mpv:id 1801, is expressed as "AUDIO:100ABCDE:AFOO0003".

Meta data further includes Playing Time 1804 indicating a playback time in addition to "creator" 1802 and "created" 1803.

LastURL 1805 of this audio asset is expressed as "DCIM/100ABCDE/AFOO0003.mp3".

The second exemplary embodiment of the present invention will now be explained. Camera model "Bar" referred to in the explanation of the second exemplary embodiment of the present invention is a tittle different from model "Foo". Model "Bar" docs not support an audio function but supports multi-shot and panorama functions instead.

Accordingly, <mpv:Audio> and <mpv:StillWithAudio> that are used in model "Foo" are not needed and instead, <mpv:StillMultiShotSequence> and <mpv:StillPanoramaSequence> are needed.

The second exemplary embodiment of the present invention also supports a multiple album function. For example, each album corresponds to a place where photos are taken. This means that a menu referred to as "New Album" in model "Bar" is further included. Whenever a user selects "Ncw Album" menu, the digital still camera generates a new album and photos taken after that time arc stored in the new album.

More specifically, the process in which a digital still camera implementing the MPV file management method according to the present invention displays stored still images on the LCD display will now be explained.

FIG. 19 illustrates an example of a playback mode scenario of a screen output on the LCD of a camera that can be provided by a file management method according to the second exemplary embodiment of the present invention.

Screen A 1900 shows a menu for selecting album "Amusement Park" 1901 and album "DownTown" 1902. If the user selects the first album 1901, screen B 1910 is displayed and if the user selects the second album 1902, screen D 1930 is displayed.

Screen B 1910 presents the thumbnail view of 7 asset images included in album "Amusement Park". Among the images, the first thumbnail M represents a multi-shot asset. If the user selects the first thumbnail, screen C 1920 is displayed and shows still images included in the multi-shot.

Screen D 1930 presents the thumbnail view of images included in album "DownTown". The second thumbnail P of screen D represents a panorama asset.

If the user selects this panorama asset, screen E 1940 is displayed and shows still images included in the panorama.

In order to support the multiple album of this scenario, one or more MPV files for each album should be generated. When the user inserts a memory card formatted and storing nothing into the digital still camera and takes a photo, model "Bar" digital still camera generates a directory structure as shown in FIG. 20.

FIG. 20 is a diagram of the directory structure generated when one still asset is generated and formed as an album according to the second exemplary embodiment of the present invention.

Referring to FIG. 20, DCIM directory is generated below the root directory, and below the DCIM directory, 100ABCDE directory is generated and SFOO0001.JPG that is a newly taken still image is stored in the 100ABCDE directory. To this point, the process is the same as in the ordinary DCF rule. According to this embodiment of the present invention, at the root directory, an index file, index.pvm, is generated, and below the root directory, MISC directory is newly generated, and album file album001.pvm is stored in this MISC directory.

The index file, index.pvm, includes album information that is information referring to an album file, and the album file, album001.pvm, includes asset information that is information referring to still image asset SFOO0001.JPG.

FIG. 21 is a diagram of the structure of the index file (index.pvm) shown in FIG. 20.

Referring to FIG. 21, the index file includes album information 2100 to refer to album001.pvm.

Information on the generated album includes an asset identifier, meta data, and asset location information, as described above with reference to FIG. 10.

The identifier of the album asset, mpv:id 2101, is expressed as "ALBUM:ALBUM001".

The meta data of the album asset includes two attributes, title and creator.

The "title" 2102 is text and is expressed as "Amusement Park". If the performance of the user input apparatus of the digital still camera is not good, the text "Amusement Park" may not be input through the user input apparatus. In this case, for example, an arbitrary name determined inside the digital still camera, that is, for example, album 1, can be used to express the title.

The "creator" 2103 indicates an album generation apparatus, and "DSC Model Bar" is expressed. As meta data information, in addition to the above examples of the title or album generation apparatus, anything that indicates attribute information of the album can be used. This depends on the design of a digital still camera.

LastURL 2104 that is album location information indicating the location where the album is stored is generated by using the location storing this album, expressing from below the root directory.

FIG. 22 is a diagram of the structure of the album file (album001.pvm) shown in FIG. 20.

Referring to FIG. 22, the album file includes asset information 2200 on asset SFOO0001.JPG.

Information on the generated asset includes an asset identifier, meta data, and asset location information as described above with reference to FIG. 10.

The identifier of the still image asset, mpv:id 2201, is expressed as "100ABCDE:SFOO0001".

The meta data of the still image asset includes three attributes, title, creator, and created.

The "title" 2202 is text and is expressed as "Amusement Park Still-1". The "creator" 2203 indicates an asset generated apparatus and "DSC Model Bar" is expressed. The "created" 2204 indicates an asset generation date.

LastURL 2205 that is album location information indicating the location where the still image asset is stored is generated by using the location storing this album, expressing from below the root directory.

FIG. 23 is a diagram of the structure of an album file (album001.pvm) presented when two still assets are further generated and formed as an album in the directory state shown in FIG. 20. When two still assets are stored in an identical album, there is no change in album information and therefore the index file does not change.

Referring to FIG. 23, it can be seen that in addition to information 2200 on asset SFOO0001. information 2310 on asset SFOO0002 and information 2320 on asset SFOO0003 are further added to the album file.

FIG. 24 is a diagram of the directory structure when one still asset and one album file are further generated in the directory state shown in FIG. 20.

Referring to FIG. 24, at 100ABCDE directory, asset SFOO004.JPG is further stored and at MISC directory, the second album file, album002.pvm" is further generated.

In this directory structure, the index file, index.pvm, has information on album001.pvm and album002.pvm, the album file, album.001.pvm, has information on assets, SFOO0001.JPG, SFOO0002.JPG, and SFOO0003.JPG, and album002.pvm has information on asset SFOO0004.JPG.

FIG. 25 is a diagram of the structure of the index file (index.pvm) shown in FIG. 24.

Referring to FIG. 25, in addition to album information 2100 to refer to album001.pvm., the index file further includes album information 2500 to refer to album002.pvm.

In the album information 2500, mpv:id 2501 that is the identifier of the album itself is expressed as "ALBUM:ALBUM002", "title" 2502 is expressed as text "DownTown", and "creator" 2503 indicating the album generation apparatus is expressed as "DSC Model Bar". Also, LastURL 2504 that is album location information indicating the location where the album is stored is generated by using the location storing this album, expressing from below the root directory.

FIG. 26 is a diagram of the structure of the album file (album002.pvm) shown in FIG. 24.

Referring to FIG. 26, the album file includes asset information 2600 on asset SFOO0004.JPG.

The identifier of the still image asset, mpv:id 2601, is expressed as "100ABCDE:SFOO0004".

The meta data of the still image asset includes three attributes, title, creator, and created. The "title" 2602 is text and is expressed as "DownTown Still-1". The "creator" 2603 indicates an asset generated apparatus and "DSC Model Bar" is expressed. The "created" 2604 indicates an asset generation date.

LastURL 2605 that is album location information indicating the location where the still image asset is stored is generated by using the location storing this album, expressing from below the root directory.

Though the file management method according to the present invention is explained as one that is mainly applied to a digital still camera in the above embodiments, the present invention is not limited to this.

It can be easily understood by a skilled person in the art of the present invention that in any multimedia appliances having a unit obtaining multimedia asset information, the present invention can manage assets by inserting information on the assets into an index file using the MPV format. Also, the present invention as described above refers to how to manage information on multimedia assets, and thus the file management system according to the present invention can be implemented in a variety of ways in actual digital still cameras or different multimedia appliances.

The file management method as described above can also be embodied as computer readable codes on a computer readable recording medium. The computer readable recording medium is any data storage device that can store data which can be thereafter read by a computer system. Examples of the computer readable recording mediuno include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While the present invention has been particularly shown and described with reference to exemplary embodiments thereof, it will be understood by those of ordinary skill in the art that various changes in form and details may be made therein without departing from the spirit and scope of the present invention as defined by the following claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

According to preferred embodiments of the present invention as described above, users can conveniently and easily manage assets obtained in multimedia appliances such as a digital still camera.

Attention is directed to all papers and documents which are filed concurrently with or previous to this specification in connection with this application and which are open to public inspection with this specification, and the contents of all such papers and documents arc incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A file management method for controlling assets in multimedia appliances comprising:
generating and managing an index file containing information on assets obtained by the multimedia appliances and based on MusicPhoto Video (MPV).

2. The method of claim 1, wherein the information on assets includes at least one of information on individual assets and information on an album obtained by grouping the individual assets.

3. The method of claim 2, wherein information on the individual assets includes at least one of an identifier (mpv:id) identifying a particular one of the individual assets, meta data indicating attribute information of the particular asset, and location information (LastURL) indicating the location where the particular asset is stored.

4. The method of claim 2 or claim 3, wherein information on the album includes at least one of an identifier (mpv:id) identifying the album, meta data indicating attribute information of the album, and location information (LastURL) indicating the location where the album is stored.

5. The method of anyone of claims 2 - 4, wherein the album includes information on one or more individual assets included in the album.

6. The method of claim 5, wherein the information on the individual assets includes at least one of an identifier (mpv:id) identifying a particular one of the individual assets, meta data indicating attribute information of the particular asset, and location information (LastURL) indicating the location where the particular asset is stored.

7. The method of any preceding claim wherein the index file is located at the root directory of a design rule for camera file system (DCF) directory structure.

8. A file management apparatus (600) for controlling assets in multimedia appliances compri.sing:
a file management unit generating and managing an index file containing information on assets obtained by the multimedia appliances and based on MusicPhotoVideo (MPV).

9. The apparatus of claim 8, wherein the information on assets includes at least one of information on individual assets and information on an album obtained by grouping the individual assets.

10. The apparatus of claim 9, wherein information on the individual assets includes at least one of an identifier (mpv:id) identifying a particular one of the individual assets, meta data indicating attribute information of the particular asset, and location information (LastURL) indicating the location where the particular asset is stored.

11. The apparatus of claim 9 or claim 10, wherein information on the album includes at least one of an identifier (mpv:id) identifying the album, meta data indicating attribute information of the album, and location information (LastURL) indicating the location where the album is stored.

12. The apparatus of any one of claims 9 - 11, wherein the album includes information on one or more individual assets included in the album.

13. The apparatus of claim 12, wherein the information on the individual assets includes at least one of an identifier (mpv:id) identifying a particular one of the individual assets, meta data indicating attribute information of the particular asset, and location information (LastURL) indicating the location where the particular asset is stored.

14. The apparatus of any one of claims 8-13, wherein the index file is located at the root directory of a design rule for camera file system (DCF) directory structure.

15. An information storage medium for controlling assets in multimedia appliances comprising:
an index file recorded thereon and containing information on assets obtained by the multimedia appliances and based on MusicPhotoVideo (MPV).

16. The medium of claim 15, wherein the information on assets includes at least one of information on individual assets and information on an album obtained by grouping the individual assets.

17. The medium of claim 16, wherein information on the individual assets includes at least one of an identifier (mpv:id) identifying a particular one of the individual assets, meta data indicating attribute information of the particular asset, and location information (LastURL) indicating the location where the particular asset is stored.

18. The medium of claim 16 or claim 17, wherein information on the album includes at least one of an identifier (mpv:id) identifying the album, meta data indicating attribute information of the album, and location information (LastURL) indicating the location where the album is stored.

19. The medium of claim 18, wherein the album includes information on one or more of the individual assets included in the album.

20. The medium of claim 19, wherein the information on the individual assets includes at least one of an identifier (mpv:id) identifying a particular one of the individual assets, meta data indicating attribute information of the particular asset, and location information (LastURL) indicating the location where the particular asset is stored.

21. The medium of any one of claims 15-20, wherein the index file is located at the root directory of a design rule for camera file system (DCF) directory structure.

22. A multimedia file controlling method for controlling a multimedia file in a multimedia appliance comprising:
obtaining the multimedia file; and
recording information on the multimedia file in a separate index file for controlling the multimedia file.

23. The method of claim 22, wherein the index file is located at the root directory of a DCF directory structure of the appliance storage medium, or at a digital camera image (DCIM) directory.
